# FASCICULE DE BREVET EUROPEEN

(11) **EP 3 380 794 B1**
(45) Date de publication et mention de la délivrance du brevet: **08.01.2020**
(21) Numéro de dépôt: 16819131.0
(22) Date de dépôt: 22.11.2016
(51) Int. Cl.: F24T 10/13, F24T 10/17, F28F 21/06

(54) **ÉCHANGEUR GÉOTHERMIQUE FERMÉ À HAUTE TEMPÉRATURE ET HAUTE PRESSION POUR UNE FORMATION MAGMATIQUE OU MÉTAMORPHIQUE**
GESCHLOSSENER GEOTHERMISCHER HOCHDRUCK- UND HOCHTEMPERATURWÄRMETAUSCHER FÜR MAGMATISCHE ODER METAMORPHE FORMATIONEN
HIGH-PRESSURE AND HIGH-TEMPERATURE CLOSED GEOTHERMAL EXCHANGER FOR A MAGMATIC OR METAMORPHIC FORMATION

(30) Priorité: 24.11.2015 FR 1561294
(43) Date de publication de la demande: 03.10.2018
(73) Titulaire: BRGM, 45060 Orléans Cedex 2 (FR)
(72) Inventeur: NGUYEN, Denis, 34000 Montpellier (FR)
(74) Mandataire: LLR
(86) Numéro de dépôt international: PCT/FR2016/053045
(87) Numéro de publication internationale: WO 2017/089694

(56) Documents cités:
- WO-A2-2011/036224
- CH-A1- 706 507
- DE-A1- 4 329 269
- FR-A1- 2 407 434
- FR-A1- 2 755 662
- FR-A1- 2 884 905
- US-A1- 2011 036 112
- US-A1- 2014 026 568
- DATABASE WPI Section PQ, Week 201461 Thomson Scientific, London, GB; Class Q42, AN 2014-Q91241 XP002760771, -& JP 2015 151837 A (KAMIYAMA) 24 août 2015 (2015-08-24)

## Description

La présente invention concerne le domaine du géostockage diffusif de chaleur, c'est à dire sans échange de matière avec le sous-sol, qui met en jeu des échangeurs géothermiques fermés dans lesquels circule un fluide caloporteur échangeant sa chaleur avec le sous-sol encaissant l'échangeur.

On entend par échangeur géothermique fermé un échangeur utilisant un fluide caloporteur ne circulant pas dans le milieu mais dans des conduites souterraines étanches. Le fluide caloporteur de ces systèmes n'appartient donc pas au milieu géologique. Par principe, le fluide caloporteur qui circule dans un système fermé est toujours le même et représente un volume limité. Dans le cas d'un échangeur géothermique fermé, il n'y a pas d'échange de matière entre l'échangeur et le milieu environnemental.

Seules sont actuellement réalisées des opérations de géostockage diffusif de chaleur mettant en œuvre de l'eau surpressée comme fluide caloporteur (Borehole Thermal Energy Storages - BTES). Ces échangeurs géothermiques sont constitués par des tubes en U, coaxiaux, ou d'une autre géométrie, généralement fabriqués en polyéthylène haute densité (PEHD) ou tout autre matériau rigide.

Les trous des forages dans le sous-sol où sont placés ces tubes sont colmatés par un ciment hydraté dont le but est d'assurer le couplage thermique entre la paroi du tube rigide constituant l'échangeur et la paroi du trou de forage.

Les échangeurs géothermiques fermés existants sont inadaptés pour des températures de fonctionnement dépassant 100°C du fait d'un couplage thermique avec le massif rocheux encaissant assuré par un ciment hydraté qui subirait une dégradation de ses propriétés géomécaniques au-delà 100°C.

C'est pourquoi actuellement, les températures du fluide caloporteur dans les opérations de géostockage diffusif de chaleur mettant en œuvre de l'eau surpressée comme fluide caloporteur dans les échangeurs géothermiques fermés sont généralement comprises entre 50°C à 70°C. La pression dans les échangeurs est de l'ordre d'une dizaine de bars.

Cependant il existe un besoin en échangeurs géothermiques fermés dont le fluide caloporteur serait à une température supérieure à 100°C.

Ainsi par exemple, pour le stockage massif d'électricité par doublet thermique comme décrit dans le document FR 3009613, le pôle « chaud » du doublet thermique est un géostockage de chaleur mettant en œuvre des échangeurs géothermiques fermés. Le fluide caloporteur dans les échangeurs géothermiques est du dioxyde de carbone (CO₂) dans un état supercritique, à une température pouvant atteindre 140°C, et une pression pouvant atteindre 120 bar.

Le fluide caloporteur pourrait également être de la vapeur surchauffée. La température dans l'échangeur pourrait alors atteindre, par exemple, 240°C.

L'invention a pour but de fournir un échangeur géothermique fermé dont le fonctionnement du fluide caloporteur peut être à une température supérieure à 100°C.

A cet effet, l'invention a pour objet un échangeur géothermique fermé pour une formation magmatique ou métamorphique, comprenant une enveloppe contenant un fluide caloporteur avec lequel elle est directement en contact.

Un tel échangeur est connu par exemple du document US 2011/0036112 A1.

Selon l'invention, l'enveloppe est souple de façon à être en contact direct, sous l'effet de la pression du fluide caloporteur, avec une paroi d'un trou de forage contenant l'échangeur.

On entend par « enveloppe souple » une enveloppe présentant une dureté shore A comprise entre 60 et 90.

On entend par « formation magmatique » une formation résultant de la cristallisation d'un magma.

On entend par « formation métamorphique » une formation ayant subi une transformation à l'état solide du fait d'une élévation de température et/ou de pression, avec notamment cristallisation de nouveaux minéraux.

L'échangeur possède les propriétés de résistance géomécanique nécessaires pour être placé en contact direct avec la formation magmatique ou métamorphique.

Lors de la mise en pression par le fluide caloporteur, la paroi de l'enveloppe, ou encore baudruche, vient se plaquer au contact du massif rocheux, assurant ainsi le couplage thermique entre l'échangeur et le massif rocheux encaissant, sans requérir de matériau de couplage thermique entre l'échangeur géothermique et le massif rocheux. Le dispositif est ainsi simplifié par rapport aux dispositifs avec matériau de couplage.

Le trou de forage dans lequel est placé l'échangeur géothermique est un trou de forage vertical.

La roche magmatique ou la roche métamorphique dans laquelle est mis en place le trou de forage est une roche saine à l'affleurement, à zéro mètre. Il ne s'agit pas d'une formation altérée. Il n'y a pas de sol en partie supérieure. S'il y a une couche végétale, on la décape avant la mise en place du trou de forage.

L'injection et le retour du fluide caloporteur sont réalisés à la même extrémité de l'échangeur géothermique, au niveau de son extrémité supérieure en surface.

Cette extrémité est dite en surface car elle est orientée vers le sol par opposition avec l'autre extrémité orientée vers la profondeur.

Selon l'invention, la partie supérieure de l'échangeur comporte un dispositif de contention adapté à limiter l'expansion de l'enveloppe souple.

Le dispositif de contention peut résister à la pression interne dans l'échangeur s'exerçant sur la partie supérieure de la baudruche.

Selon l'invention, le dispositif de contention est constitué par un harnais de contention qui coiffe, au moins en partie, la partie supérieure de l'échangeur.

De façon préférentielle, le dispositif de contention s'étend sur une longueur de 1m à 3m depuis l'extrémité supérieure de l'échangeur.

La partie du dispositif de contention située sous la surface du sol est bloquée par écrasement entre la baudruche de l'échangeur mise en pression par le fluide caloporteur et la paroi du trou de forage.

Selon l'invention, le dispositif de contention est fabriqué en sangles aramide telles que des sangles Kevlar.

De façon avantageuse, l'échangeur géothermique s'étend sur une longueur de 10 à 30 m.

Selon un mode de réalisation, il peut s'étendre sur une longueur de 12 à 30 m. Selon un autre mode de réalisation, il peut s'étendre sur une longueur de 10 à 20 m.

Son diamètre est de 20 à 50 cm, préférentiellement de 20 à 30 cm.

L'épaisseur de la paroi de la baudruche est de 10mm à 50mm, préférentiellement de 10 à 30 mm.

Avantageusement, l'enveloppe souple est en élastomère de silicone.

Ce matériau possède toutes les qualités de résistance thermomécanique pour fonctionner à des température élevées (jusqu'à au moins 250°C) et des pressions élevées (jusqu'à au moins 150 bar), et présente un coefficient d'élasticité élevé permettant à la paroi de la baudruche de l'échangeur géothermique d'épouser au mieux la paroi du massif rocheux encaissant une fois la baudruche mise en pression par le fluide caloporteur dans l'échangeur. Un tel échangeur géothermique peut donc être utilisé dans le cas des projets de géostockage diffusif de chaleur à température supérieure à 100°C, que ce soit avec de la vapeur surchauffée oudu CO₂ dans un état supercritique.

Dans ce mode de réalisation, on choisit un élastomère de silicone à conductivité thermique augmentée, notamment supérieure à 3.5 W/(m.K), de manière à ce qu'elle soit similaire à la conductivité thermique du granite.

De façon optionnelle, l'échangeur géothermique comporte également un tube intérieur dans lequel est injecté le fluide caloporteur. Le tube intérieur est pourvu dans sa partie basse d'une lumière permettant le passage du fluide vers l'extérieur du tube intérieur.

Un tel dispositif permet d'adapter l'échangeur à des forages pouvant atteindre une profondeur de 30 m.

De façon préférentielle, le tube intérieur présente un diamètre intérieur de 120 à 200 mm en fonction du diamètre de l'échangeur géothermique. De façon avantageuse, le diamètre intérieur du tube intérieur est de 120 mm pour un diamètre de l'échangeur de 20 cm, et de 200 mm pour un diamètre de l'échangeur de 30 cm.

De façon générale, le diamètre du tube intérieur est déterminé de façon à ce que la perte de charge de l'écoulement entre son entrée dans l'échangeur jusqu'à sa sortie de l'échangeur (c'est-à-dire la somme des pertes de charge dans le tube intérieur et dans l'espace annulaire) soit minimale.

Avantageusement, le tube intérieur est fabriqué dans un matériau souple tel que l'élastomère de silicone. Pour la fabrication du tube intérieur, on choisit un élastomère de silicone de faible conductivité thermique, notamment entre 0,15 et 0,25 W/(m.K), de façon à limiter les fuites thermiques internes à l'échangeur géothermique.

L'invention sera mieux comprise à la lecture des figures annexées, qui sont fournies à titre d'exemples et ne présentent aucun caractère limitatif, dans lesquelles :
La figure 1 est une vue en coupe longitudinale d'un échangeur géothermique fermé selon un mode de réalisation de l'invention.
La figure 2 est une vue en coupe longitudinale d'un échangeur géothermique fermé selon un second mode de réalisation de l'invention.

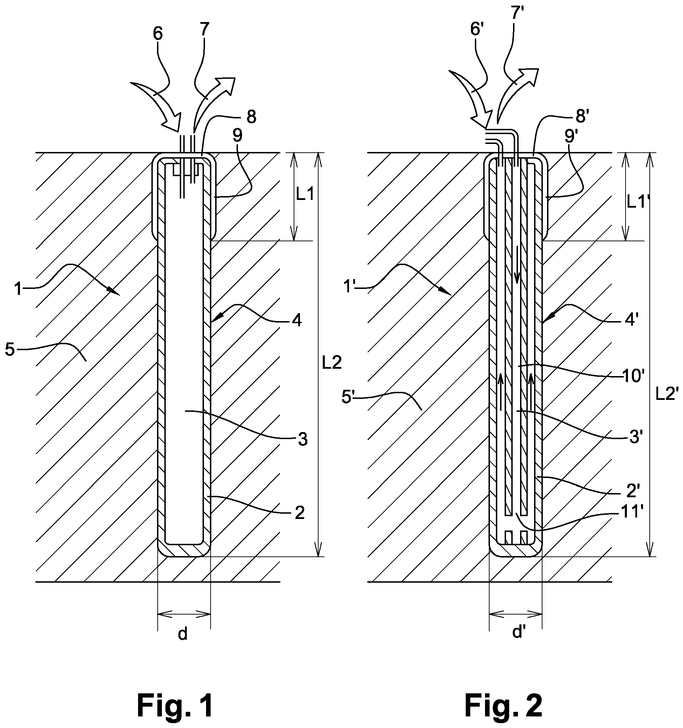

On se réfère maintenant à la figure 1 qui montre un échangeur 1 géothermique fermé selon un mode de réalisation de l'invention. L'échangeur géothermique comprend une enveloppe 2 contenant du CO₂ dans un état supercritique 3 (CO₂ supercritique) utilisé en tant que fluide caloporteur. L'enveloppe 2 et le fluide caloporteur 3 sont directement en contact.

L'enveloppe 2 est en élastomère de silicone qui est un matériau souple, dont la dureté shore A est comprise entre 60 et 90. Elle pourrait cependant être réalisée en tout matériau lui conférant la souplesse permettant sa mise en contact direct, sous l'effet du fluide caloporteur, avec la paroi du trou de forage.

L'élastomère de silicone utilisé pour réaliser l'enveloppe 2 présente une conductivité thermique supérieure à 3.5 W/(m.K). Cette valeur est similaire à la conductivité thermique du granite.

Le fluide caloporteur peut être tout fluide caloporteur chimiquement compatible avec de l'élastomère de silicone, pouvant présenter une température allant jusqu'à au moins 250°C et une pression jusqu'à au moins 150 bar.

L'échangeur géothermique 1 est installé dans un trou de forage 4 vertical, réalisé dans une formation granitique 5. Sous l'effet de la pression du CO₂ supercritique 3, l'enveloppe 2 est mise en contact direct avec la paroi du trou de forage 4. L'injection 6 et le retour 7 du fluide caloporteur 3 sont réalisés à l'extrémité 8 en surface de la partie supérieure de l'enveloppe 2.

La partie supérieure de l'échangeur 1 est contenue dans un harnais de contention 9 fabriqué en sangles Kevlar. Il peut être fabriqué en d'autres sangles aramide. Les sangles utilisées présentent une largeur de 1 cm et leur largeur cumulée est de 40 cm. Les sangles pourraient présenter une largeur différente.

Le harnais de contention 9 s'étend sur la partie supérieure de l'enveloppe, incluant son extrémité en surface 8. Il s'étend sur une longueur L1 de 1 m qui est bloquée entre la baudruche 2 et la formation granitique 5.

L'enveloppe 2 s'étend sur une longueur L2 de 20 m. Cette longueur peut être différente. Elle peut varier de 10 à 20 m. Son diamètre d est de 20 cm. Il peut être différent et varier de 20 à 30 cm. L'épaisseur de sa paroi est de 10 mm. Elle peut être différente et varier de 10 à 30 mm.

Pour une pression interne de 120 bar dans l'enveloppe 2, l'effort sur la partie supérieure de l'échangeur de 20 cm de diamètre en contact avec la pression atmosphérique est de 38 000 daN. Les sangles kevlar utilisées présentent une résistance à la traction de 1 000 daN par cm de largeur. Une largeur cumulée d'une quarantaine de cm de sangles répartie sur les 62 cm de circonférence de la baudruche 2 permet de compenser l'effort sur la partie supérieure de l'échangeur. Lors de la mise en pression, lorsque la baudruche 2 n'est pas encore plaquée contre la paroi du trou, la résistance à l'étirement de la baudruche 2 suffit à maintenir la baudruche 2 et le fluide caloporteur 3 dans le trou de forage 4. Lorsque la baudruche 2 est plaquée par 120 bar de pression interne contre la paroi du trou de forage 4, la baudruche 2 est maintenue par la résistance des parois du trou de forage et par la résistance du harnais de contention 9. La longueur de sangle bloquée entre la baudruche 2 et la formation granitique 5 étant de 1 m, la surface de sangle soumise à la pression de 120 bar est de 100 cm2, ce qui correspond à un effort d'écrasement de la sangle de 12 000 daN, ce qui permet de résister à une traction de 1 000 daN sur la sangle.

La figure 2 montre un échangeur 1' géothermique fermé selon un autre mode de réalisation de l'invention. L'échangeur 1' comprend une enveloppe 2' contenant du CO₂ supercritique 3'. L'enveloppe 2' et le fluide caloporteur 3' sont directement en contact.

L'enveloppe 2' est en élastomère de silicone dont la dureté shore A comprise entre 60 et 90. Elle pourrait cependant être réalisée en tout matériau lui conférant la souplesse permettant sa mise en contact direct, sous l'effet du fluide caloporteur, avec la paroi du trou de forage.

L'élastomère de silicone utilisé pour réaliser l'enveloppe 2' présente une conductivité thermique augmentée, supérieure à 3.5 W/(m.K).

Le fluide caloporteur peut être tout fluide caloporteur chimiquement compatible avec de l'élastomère de silicone, pouvant présenter une température allant jusqu'à au moins 250°C et une pression jusqu'à au moins 150 bar.

L'échangeur 1' est installé dans un trou de forage 4' vertical, réalisé dans une formation granitique 5'. Sous l'effet de la pression du CO₂ supercritique 3', l'enveloppe 2 est mise en contact direct avec la paroi du trou de forage 4'. L'injection 6' et le retour 7' du fluide caloporteur 3' sont réalisées à l'extrémité 8' en surface de la partie supérieure de l'enveloppe 2'.

La partie supérieure de l'échangeur 1' est contenue dans un harnais de contention 9' en sangles Kevlar. Il peut être fabriqué en d'autres sangles aramide. Les sangles utilisées présentent une largeur de 1 cm et leur largeur cumulée est de 40 cm. Les sangles pourraient présenter une largeur différente. Le harnais de contention constitue un dispositif de contention dont la forme pourrait être différente de celle d'un harnais.

Le harnais de contention 9' s'étend sur la partie supérieure de l'enveloppe, incluant son extrémité en surface 8'. Il s'étend sur une longueur L1' de 1 m qui est bloquée entre la baudruche 2 et la formation granitique 5.

L'échangeur 1' comporte également un tube intérieur 10' en élastomère de silicone. Ce tube intérieur 10' présente une lumière 11' permettant le passage du fluide entre l'intérieur du tube 10' et l'extérieur du tube 10'.

La circulation du fluide caloporteur 3' est ainsi organisée dans l'enveloppe 2' depuis l'intérieur du tube 10' vers l'extérieur du tube 10', tel que représenté par les trois flèches dans l'enveloppe 2'. Le sens de circulation dans l'enveloppe 2' peut être organisé en sens inverse.

L'élastomère de silicone constituant le tube intérieur 10' a une faible conductivité thermique, de manière à limiter les fuites thermiques internes. La valeur de sa conductivité thermique est de l'ordre de 0,2 W/(m.K).

L'enveloppe 2' s'étend sur une longueur L2' de 30 m. Cette longueur peut être différente. Elle peut varier de 12 à 30 m. Son diamètre d'est de 20 cm. Il peut être différent et varier de 20 à 30 cm. Le diamètre intérieur du tube intérieur 10' est de 120 mm. Le diamètre du tube intérieur peut varier en fonction du diamètre d' de l'échangeur géothermique 1'. Il peut être de 200 mm lorsque le diamètre d' de l'échangeur géothermique est de 30 cm. L'épaisseur de sa paroi est de 10 mm. Elle peut être différente et varier de 10 à 30 mm.

Pour une pression interne de 120 bar dans l'enveloppe 2', l'effort sur la partie supérieure de l'échangeur de 20 cm de diamètre en contact avec la pression atmosphérique est de 38 000 daN. Les sangles kevlar utilisées présentent une résistance à la traction de 1 000 daN par cm de largeur. Une largeur cumulée d'une quarantaine de cm de sangles répartie sur les 62 cm de circonférence de la baudruche 2 permet de compenser l'effort sur la partie supérieure de l'échangeur. Lors de la mise en pression, lorsque la baudruche 2' n'est pas encore plaquée contre la paroi du trou, la résistance à l'étirement de la baudruche 2' suffit à maintenir la baudruche 2' et le fluide caloporteur 3' dans le trou de forage 4'. Lorsque la baudruche 2' est plaquée par 120 bar de pression interne contre la paroi du trou de forage 4', la baudruche 2' est maintenue par la résistance des parois du trou de forage et par la résistance du harnais de contention 9'. La longueur de sangle bloquée entre la baudruche 2' et la formation granitique 5' étant de 1 m, la surface de sangle soumise à la pression de 120 bar est de 100 cm2, ce qui correspond à un effort d'écrasement de la sangle de 12 000 daN, ce qui permet de résister à une traction de 1 000 daN sur la sangle.

L'invention n'est pas limitée aux modes de réalisation présentés et d'autres modes de réalisation apparaîtront clairement à l'homme du métier.

## Revendications

1. Échangeur géothermique fermé (1, 1') pour une formation (5, 5 ') magmatique ou métamorphique, comprenant une enveloppe (2, 2') contenant un fluide caloporteur (3, 3') avec lequel elle est directement en contact, l'enveloppe (2, 2') étant souple de façon à être en contact direct, sous l'effet de la pression du fluide caloporteur (3, 3'), avec une paroi d'un trou de forage (4, 4') contenant l'échangeur (1, 1'), l'échangeur étant **caractérisé en ce qu'**il comporte dans sa partie supérieure un harnais de contention (9, 9') adapté à limiter l'expansion de l'enveloppe souple (2, 2'), qui coiffe, au moins en partie, la partie supérieure de l'échangeur (1, 1'), lequel harnais de contention (9, 9') étant fabriqué en sangles aramide.

2. Échangeur géothermique (1, 1') selon la revendication 1, l'enveloppe souple (2, 2') présentant une dureté shore A comprise entre 60 et 90.

3. Échangeur géothermique (1, 1') selon l'une des revendications précédentes, le harnais de contention (9, 9') étant fabriqué en sangles Kevlar.

4. Échangeur géothermique (1, 1') selon l'une quelconque des revendications précédentes, l'enveloppe souple (2, 2') étant en élastomère de silicone.

5. Échangeur géothermique (1, 1') selon la revendication précédente, l'élastomère de silicone présentant une conductivité thermique augmentée, notamment supérieure à 3.5 W/(m.K).

6. Échangeur géothermique (1') selon l'une quelconque des revendications précédentes, comportant en outre un tube intérieur (10') dans lequel est injecté le fluide caloporteur (3'), le tube intérieur (10') étant pourvu dans sa partie basse d'une lumière permettant le passage du fluide caloporteur (3') vers l'extérieur du tube intérieur (10').

7. Échangeur géothermique (1') selon la revendication précédente, le tube intérieur (10') étant en élastomère de silicone de faible conductivité thermique, notamment de l'ordre de 0.2 W/(m.K).

8. Échangeur géothermique (1, 1') selon l'une quelconque des revendications précédentes, la température du fluide caloporteur (3, 3') étant supérieure à 100°C.

## Patentansprüche

1. Geschlossener geothermischer Wärmetauscher (1, 1') für eine magmatische oder metamorphe Formation (5, 5'), umfassend eine Umhüllung (2, 2'), die ein Wärmeträgerfluid (3, 3') enthält, mit dem sie unmittelbar in Kontakt ist, wobei die Umhüllung (2, 2') flexibel ist, so dass sie, unter der Einwirkung des Drucks des Wärmeträgerfluids (3, 3'), mit einer Wand eines Bohrlochs (4, 4'), die den Wärmetauscher (1, 1') enthält, in unmittelbarem Kontakt ist, wobei der Wärmetauscher **dadurch gekennzeichnet ist, dass** er in seinem oberen Teil ein Haltegeschirr (9, 9') aufweist, das eingerichtet ist, um die Ausdehnung der flexiblen Umhüllung (2, 2') zu begrenzen, und das, zumindest teilweise, den oberen Teil des Wärmetauschers (1, 1') bedeckt, wobei das Haltegeschirr (9, 9') aus Aramidgurten hergestellt ist.

2. Geothermischer Wärmetauscher (1, 1') nach Anspruch 1, wobei die flexible Umhüllung (2, 2') eine Shore-Härte A aufweist, die zwischen 60 und 90 beträgt.

3. Geothermischer Wärmetauscher (1, 1') nach einem der vorhergehenden Ansprüche, wobei das Haltegeschirr (9, 9') aus Kevlargurten hergestellt ist.

4. Geothermischer Wärmetauscher (1, 1') nach einem der vorhergehenden Ansprüche, wobei die flexible Umhüllung (2, 2') aus Silikonelastomer ist.

5. Geothermischer Wärmetauscher (1, 1') nach dem vorhergehenden Anspruch, wobei das Silikonelastomer eine erhöhte Wärmeleitfähigkeit aufweist, insbesondere größer als 3,5 W/(m.K).

6. Geothermischer Wärmetauscher (1') nach einem der vorhergehenden Ansprüche, ferner aufweisend eine innere Rohrleitung (10'), in die das Wärmeträgerfluid (3') eingespritzt wird, wobei die innere Rohrleitung (10') in ihrem unteren Teil mit einem Schlitz versehen ist, der den Durchlass des Wärmeträgerfluids (3') nach außerhalb der inneren Rohrleitung (10') gestattet.

7. Geothermischer Wärmetauscher (1') nach dem vorhergehenden Anspruch, wobei die innere Rohrleitung (10') aus Silikonelastomer niedriger Wärmeleitfähigkeit ist, insbesondere in der Größenordnung von 0,2 W/(m.K).

8. Geothermischer Wärmetauscher (1, 1') nach einem der vorhergehenden Ansprüche, wobei die Temperatur des Wärmeträgerfluids (3, 3') größer als 100 °C ist.

## Claims

1. A closed geothermal exchanger (1, 1') for a magmatic or metamorphic formation (5, 5'), comprising a shell (2, 2') containing a heat-transfer fluid (3, 3') with which it is directly in contact,
in which the shell (2, 2') is flexible so that it can be in direct contact, under the effect of the pressure of the heat-transfer fluid (3, 3') with a wall of a borehole (4, 4') containing the exchanger (1, 1') the exchanger being **characterized in that** the upper part of the exchanger comprises a containment harness (9, 9') designed to limit the expansion of the flexible shell (2, 2'), which, at least in part, caps the upper part of the exchanger (1, 1'), the containment harness (9, 9') being made from aramid straps.

2. The geothermal exchanger (1, 1') as claimed in claim 1, the flexible shell (2, 2') having a shore A hardness comprised between 60 and 90.

3. The geothermal exchanger (1, 1') as claimed in the preceding claim, the containment harness (9, 9') being made from Kevlar straps.

4. The geothermal exchanger (1, 1') as claimed in any one of the preceding claims, the flexible shell (2, 2') being made of silicone elastomer.

5. The geothermal exchanger (1, 1') as claimed in the preceding claim, the silicone elastomer having an increased thermal conductivity, notably higher than 3.5 W/(m.K).

6. The geothermal exchanger (1') as claimed in any one of the preceding claims, further comprising an inner tube (10') into which the heat-transfer fluid (3') is injected, the inner tube (10') being provided in its bottom part with an opening that allows the heat-transfer fluid (3') to pass toward the outside of the inner tube (10').

7. The geothermal exchanger (1') as claimed in the preceding claim, the inner tube (10') being made of a silicone elastomer of low thermal conductivity, notably of the order of 0.2 W/(m.K).

8. The geothermal exchanger (1, 1') as claimed in any one of the preceding claims, the temperature of the heat-transfer fluid (3, 3') being greater than 100°C.
